# EUROPÄISCHE PATENTSCHRIFT

(11) **EP 2 441 567 B1**
(45) Veröffentlichungstag und Bekanntmachung des Hinweises auf die Patenterteilung: **04.06.2014**
(21) Anmeldenummer: 11450105.9
(22) Anmeldetag: 19.08.2011
(51) Int. Cl.: B29C 63/02, B65D 90/04

(54) **Verfahren zum Sanieren eines Tanks**
Method for retrofitting a tank
Procédé de réhabilitation d'un réservoir

(30) Priorität: 14.10.2010 AT 63410 U
(43) Veröffentlichungstag der Anmeldung: 18.04.2012
(73) Patentinhaber: Wolftank Adisa GmbH, 6020 Innsbruck (AT)
(72) Erfinder: Majohr, Martin Falk, 39576 Stendal (DE); Werth, Peter, 6162 Mutters (AT)
(74) Vertreter: Weiser, Andreas

(56) Entgegenhaltungen:
- EP-A2- 1 162 158
- FR-A1- 2 332 918
- US-A- 3 505 769
- US-A- 5 457 919

## Beschreibung

Die vorliegende Erfindung betrifft ein Verfahren zum Sanieren eines Tanks, der einen flachen Boden und einen stumpf daraufgesetzten und damit verschweißten Mantel besitzt und auf einem ringsum vorragenden Fundament steht, durch Aufbringen einer Schutzauskleidung auf zumindest einen Teil der Innenseite des Tanks gemäß dem Oberbegriff des Anspruchs 1.

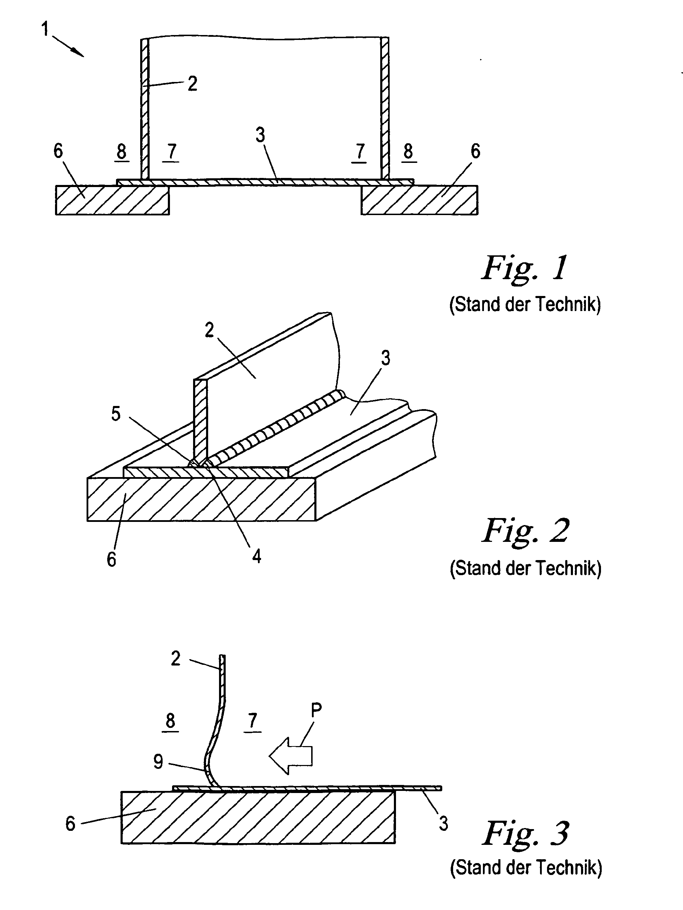

Die Fig. 1 bis 3 zeigen einen derartigen Flachbodentank 1 nach dem Stand der Technik, wie er beispielsweise zur Lagerung von Öl, Benzin, Lösungsmitteln, Säuren, Laugen od.dgl. Verwendung findet. Solche Tanks sind so konstruiert, dass ein Tankmantel 2 aus metallischen Werkstoffen direkt auf einen flachen Boden 3 aus Bodenblechen, ebenfalls aus metallischen Werkstoffen, stumpf aufgesetzt und mittels Schweißnähten 3, 4 verschweißt wird. Der gesamte Tank ruht auf einem Sockel- oder Ringfundament 6. Zwischen Mantel 2 und Boden 3 ergeben sich dadurch jeweils umlaufende Eckbereiche 7, 8, in denen große Kräfte auf den Mantel 2 wirken: Neben den statischen Kräften der Konstruktion selbst stellt der tankinnenseitige Eckbereich 8 für die Flüssigkeitssäule im Tank 1 den tiefsten Punkt dar und daher ist dort auch der hydrostatische Druck P am größten. Dazu wirken auch temporäre Kräfte von außen, beispielsweise die am Tank 1 angreifenden Windlasten, als Scherkräfte. Alle diese mechanischen Kräfte greifen direkt an den Schweißnähten 4, 5 an. Damit sind die Eckbereiche 7, 8 die am stärksten beanspruchten und kritischsten Punkte eines Flachbodentanks.

Dazu kommt der Effekt, der durch den Flüssigkeitsdruck P im Tank 1 auftritt. Durch den permanenten Druck wölbt sich der Bereich des Mantels 2 direkt im Eckbereich 7 nach außen und bildet dort eine Hohlkehle 9 (Fig. 3), was nochmals zusätzliche Scherkräfte auf die Schweißnähte 4, 5 ausübt. Durch die sich ändernde Füllhöhe des Tankinhalts treten zudem häufig Druckänderungen auf, welche auch die Ausprägung der Wölbung ändern.

Häufig werden deshalb um die Hohlkehle 9 herum Verstärkungen von innen oder außen verwendet, ebenfalls in der Regel aus metallischen Werkstoffen, um diese Kräfte teilweise aufzunehmen. Aber auch durch solche Verstärkungen wird der Effekt der Verformung des Tankmantels 2 nur verringert, aber nicht behoben.

Da die gesamte Flachbodentankkonstruktion aus metallischen Werkstoffen besteht, ergibt sich über die gesamte Nutzungszeit des Tanks gesehen ein weiteres Problem. Aufgrund der natürlichen Witterungseinflüsse wird das Metall angegriffen. Bei der herkömmlichen Bauweise von Flachbodentanks befindet sich an der Hohlkehle 9 außen eine Hinterschneidung im Eckbereich 7, in der sich leicht Wasser sammeln kann, was die Korrosion an dieser Stelle begünstigt. Über die Lebensdauer des Tanks führt dies häufig zu Korrosionsproblemen.

Die großen Krafteinwirkungen, die Wölbung des Tankmantels zu einer Hohlkehle sowie die Korrosion des Tanks von außen können die Konstruktion an der Hohlkehle entscheidend schwächen und zum Versagen der Schweißnaht führen, was einen großen Schaden zur Folge haben kann.

Um solchen Schäden vorzukehren, werden bei einer normgerechten Sanierung eines Flachbodentanks dieser Art nach EN 13160 Leckschutzauskleidungen in den Tank eingebracht, die mindestens so entsprechend den allgemein anerkannten Regeln der Technik beschaffen sowie eingebaut, aufgestellt, unterhalten und betrieben sind, dass eine Verunreinigung der Umgebung, insbesondere von Gewässern, nicht zu besorgen ist. Zu diesem Zweck werden in der Regel Leckschutzauskleidungen aus Kunststoff mit einer integrierten Abstandshalterschicht verwendet, so dass ein Hohlraum zwischen der Auskleidung und der Tankwandung gebildet wird. In dem Hohlraum wird dann mittels eines Leckschutzgerätes ein Vakuum oder Überdruck erzeugt, das bzw. der laufend überwacht wird: Tritt ein Leck auf, so entstehen Druckänderungen und das Leckschutzgerät löst Alarm aus.

Leckschutzauskleidungen dieser und ähnlicher Arten sind beispielsweise in den Schriften EP 0 069 303, DE 36 22 593, EP 0 470 321, EP 0 754 635, EP 1 602 597, EP 2 055 404, DE 91 15 518, DE 93 04 896 U1, IT VR 940004 A, DE 196 26 558, DE 83 16 892, DE 39 18 402, DE 295 13 086, DE 196 21 469, DE 297 13 621, DE 297 19 210, DE 38 16 066, DE 41 34 579 und WO 2008/038053 beschrieben.

Aus der US 3 505 769 ist bekannt, im Eckbereich eines Tanks eine Stütze aus Kunststoff-Kitt zu formen und den Tank dann mit glasfaserverstärktem Kunststoff auszukleiden.

All diesen bekannten Lösungen ist gemeinsam, dass sie zwar die Doppelwandigkeit eines Tanks herstellen, aber die mechanischen Kräfte, vor allem die Scherkräfte, welche auf dessen Mantel 2 in den Eckbereichen 7, 8 wirken, nicht beseitigen bzw. auch nur entscheidend verringern.

Die vorliegende Erfindung setzt sich zum Ziel, ein Verfahren zum Sanieren von Flachbodentanks zu schaffen, welches zu einer dauerhafteren und stabileren Sanierung des Tanks führt als die bekannten Lösungen.

Dieses Ziel wird mit einem Sanierungsverfahren der einleitend genannten Art erreicht, bei dem vor dem Aufbringen der Schutzauskleidung in den auf der Tankinnenseite zwischen Boden und Mantel umlaufenden Eckbereich ein umlaufender Füllkörper mit einem etwa dreieckigen Querschnitt eingebracht wird und auf den auf der Tankaußenseite zwischen Fundament und Mantel umlaufenden Eckbereich ein weiterer umlaufender Füllkörper mit einem etwa dreieckigen Querschnitt aufgebracht wird.

Mit dem Verfahren der Erfindung wird erstmals die Hohlkehle im innenseitigen Eckbereich eines Flachbodentanks unter der Schutzauskleidung ausgefüllt und verstärkt und auch der außen umlaufende Eckbereich, d.h. der Hohlkehlenbereich des Mantels von außen, durch einen Füllkörper kraftschlüssig abgestützt, so dass die anliegenden mechanischen Kräfte, insbesondere auch die Scherkräfte auf die Schweißnähte, optimal aufgenommen, verteilt und somit lokal verringert werden. Durch den Schutz der Hohlkehle steigt die Lebensdauer des Flachbodentanks erheblich, bei gleichzeitiger Verringerung der Wartungs- und Inspektionsintervalle und damit -kosten. Weniger Wartungen bedeuten gerade bei Flachbodentanks auch eine wesentliche Verringerung der Ausfall- und Stillstandszeiten des Tanks. Daneben wird die Gesamtsicherheit des Flachbodentanks über die gesamte Lebensdauer wesentlich gesteigert, so dass die Wahrscheinlichkeit für einen kostenintensiven Umweltschaden aufgrund von Materialversagen an der Hohlkehle sinkt. Das Verfahren der Erfindung lässt sich mit allen bekannten Schutzauskleidungen, auch normgerechten Leckschutzauskleidungen, durchführen und entlastet auch diese selbst. Überdies schützt der weitere Füllkörper die Hohlkehle von außen vor Witterungsbedingungen und lässt das Regenwasser leicht von der Tankwand ablaufen, so dass das Sammeln von Wasser in den Ecken verhindert wird.

Gemäß einer ersten bevorzugten Ausführungsform der Erfindung wird als Füllkörper eine aushärtende Füllmasse eingebracht, bevorzugt ein zementverbundener, kunststoffvergüteter Zweikomponenten-Mörtel. Eine solche Füllmasse kann praktisch fugen- und lückenlos in den Eckbereich eingebracht werden.

Bevorzugt wird vor dem Einbringen der Füllmasse der genannte Eckbereich sandgestrahlt und besonders bevorzugt mit einem Haftprimer behandelt, um die Anhaftung der Füllmasse an der Tankinnenseite zu verbessern.

In einer alternativen Ausführungsform der Erfindung werden als Füllkörper ein oder mehrere Kunststoffformteile eingebracht. Diese können vorgefertigt und so rasch vor Ort eingesetzt werden, beispielsweise zusammengesteckt und eingelegt.

Gemäß einer bevorzugten Ausführungsform sind die Kunststoffformteile ring- oder sektorförmige Kunststoffrohre mit etwa dreieckigem Querschnitt, besonders bevorzugt mit abgerundeten Ecken, um scharfe Kanten zu vermeiden.

In jeder Ausführungsform ist es besonders günstig, wenn auf den Füllkörper und die unmittelbar daran angrenzenden Bereiche des Bodens und des Mantels eine Zwischenschicht aus kunstharzgetränkten Glas- und/oder Kohlefasern aufgetragen wird, bevor die Schutzauskleidung aufgebracht wird. Diese Zwischenschicht kann beispielsweise mindestens 20 Zentimeter über den Füllkörper, d.h. die Füllmasse bzw. die Kunststoffformteile, auf die Tankinnenseite hinausragen. Dadurch kann eine zusätzliche Verstärkung und Kraftaufnahme bzw. Kraftverteilung im Eckbereich erreicht werden.

Bevorzugt wird als Zwischenschicht ein mehrlagiges Glasseidengewebe verwendet, dessen Zugfestigkeit besonders bevorzugt in Richtung vom Boden zum Mantel größer ist als in Umlaufrichtung, wodurch sich hohe Rissfestigkeit ergibt.

Wie bereits erwähnt, kann die Schutzauskleidung gleichzeitig - auch wenn dies nicht zwingend ist - zur Herstellung einer Doppelwandigkeit eingesetzt werden, um eine Druck-Leckschutzüberwachung zu ermöglichen. Zu diesem Zweck ist die Schutzauskleidung bevorzugt eine Leckschutzauskleidung, die besonders bevorzugt eine Abstandshalteschicht umfasst, insbesondere bevorzugt eine Noppenfolie.

In an sich bekannter Weise kann die Schutzauskleidung ferner kunstharzgetränkte Glas- und/oder Kohlefasern umfassen.

In einer ersten bevorzugten Variante wird vor dem Aufbringen der Füllmasse der genannte Eckbereich sandgestrahlt und bevorzugt mit einem Haftprimer behandelt. Dadurch ergibt sich eine fugenlose, optimal angepasste Abstützung von außen. Bevorzugt wird dabei vor dem Aufbringen der Füllmasse der genannte Eckbereich sandgestrahlt und bevorzugt mit einem Haftprimer behandelt.

In einer zweiten bevorzugten Variante werden als weiterer Füllkörper ein oder mehrere Kunststofformteile aufgebracht, bevorzugt ring- oder sektorförmige Kunststoffrohre mit etwa dreieckigem Querschnitt, was eine besonders schnelle Sanierung vor Ort ermöglicht.

In beiden Varianten können anschließend auf den weiteren Füllkörper und die unmittelbar daran angrenzenden Bereiche des Fundaments und des Mantels eine Deckschicht aus Kunstharz oder bevorzugt kunstharzgetränkten Glas- und/oder Kohlefasern aufgetragen werden, wodurch die Sanierung eine zusätzliche Versiegelung erhält.

Die Erfindung wird nachstehend anhand eines in den beigeschlossenen Zeichnungen dargestellten Ausführungsbeispiels näher erläutert. In den Zeichnungen zeigen
die Fig. 1 bis 3 einen zu sanierenden Flachbodentank nach dem Stand der Technik im Schnitt (Fig. 1), in einer ausschnittsweisen vergrößerten Detailansicht seines Eckbereichs zwischen Boden und Mantel (Fig. 2) und im Eckbereich von Fig. 2 vergrößert im Schnitt (Fig. 3);
Fig. 4 das Ergebnis einer Ausführungsform des Sanierungsverfahrens am inneren Eckbereich des Tanks;
Fig. 5 das Ergebnis einer alternativen Ausführungsform der Variante von Fig. 4;
Fig. 6 das Ergebnis einer weiteren Ausführungsform des Sanierungsverfahrens am äußeren Eckbereich des Tanks; und
Fig. 7 das Ergebnis einer alternativen Ausführungsform der Variante von Fig. 6.

Hinsichtlich der Fig. 1 bis 3 zum Stand der Technik wird auf die einleitenden Ausführungen verwiesen.

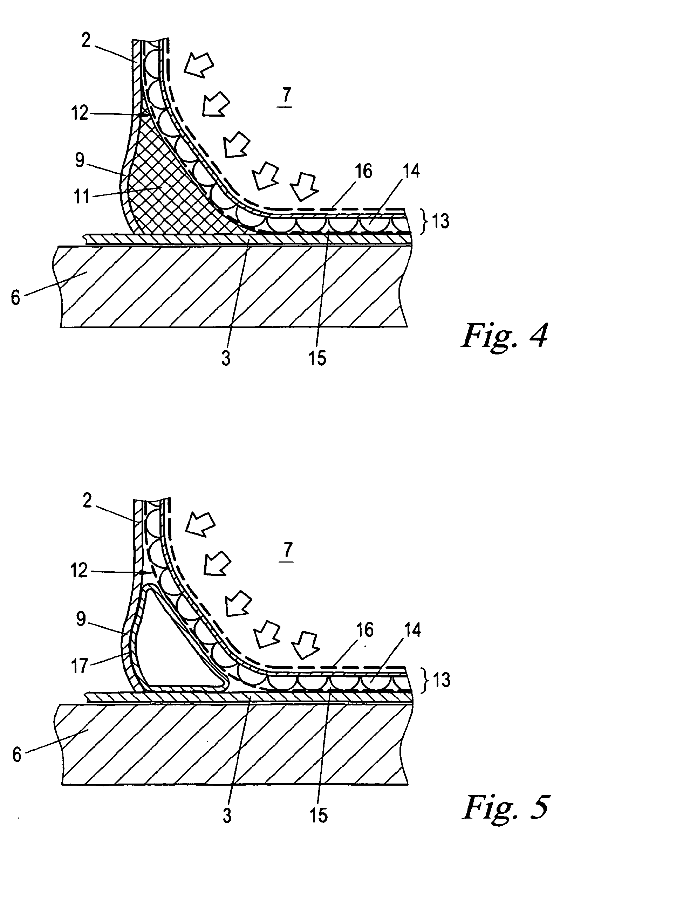

Fig. 4 zeigt das Verfahren zum Sanieren des Tanks 1 der Fig. 1 bis 3 in seinem innenseitigen Eckbereich 7.

Als Vorbereitung werden der Tankboden 3 und der Tankmantel 2 im Bereich 7 der Hohlkehle 9 sandgestrahlt, um einerseits die Oberfläche sauber und fettfrei und andererseits eine höhere Haftfestigkeit zu erhalten. Eventuell kann bei schlechter Oberflächenqualität noch ein zweikomponentiger Haftprimer aufgetragen werden.

Sodann wird der gesamte Eckbereich 7 mit einer Füllmasse 11 ausgefüllt. Die Füllmasse 11 kann aus medienbeständigem Mörtel, vorzugsweise einem zementverbundenen, kunststoffvergüteten Zweikomponenten-Mörtel, oder artverwandten Verbindungen bestehen. Der Füllmasse 11 kann zusätzlich auch Sand zugegeben werden. Die Füllmasse 11 wird so eingebracht, dass der Eckbereich 7 komplett geschlossen wird und sie insgesamt etwa Dreieckform einnimmt. Die längere Seite des Dreiecks bildet eine "neue", nun abgeschrägte Tankinnenwand. Um etwaige Kanten zu vermeiden und einen harmonischen Übergang für die später darauf applizierte Schutzauskleidung zu schaffen, sollte die Längsseite des Dreiecks eine leichte Rundung ergeben. Mit dieser Maßnahme wird der Eckbereich 7 verschlossen und die anliegende, mechanische Kraft optimal verteilt und somit verringert.

Zur weiteren Verstärkung des Eckbereichs 7 kann optional auf die Füllmasse 11 eine Zwischenschicht 12 aus kunststoffgetränkten Glas- und/oder Kohlefasermatten, -gelegen, -geweben oder -vliesen aufgetragen werden. Die Zwischenschicht 12 sollte bevorzugt mindestens 20 Zentimeter über das Ende der Füllmasse 11 hinausragen und kann falls gewünscht sich auch weiter über die gesamte Innenseite von Mantel 2 und Boden 3 erstrecken.

Als besonders vorteilhaft für die Zwischenschicht 12 hat sich die Nutzung eines mehrschichtigen Hybrid-Glasseidengewebes erwiesen, welches in diesem Bereich einen besonderen Elastizitätsmodul besitzt und somit die Gefahr der Rissbildung senkt. Gemäß einer bevorzugten Ausführungsform ist die Zugfestigkeit dabei in Richtung vom Boden 3 zum Mantel 2 größer. Das Seidengewebe besitzt dazu z.B. eine große Zahl von Schuss- und Kettfäden, die so angeordnet sind, dass die Zahl der vom Boden 3 zum Mantel 2 verlaufenden Fäden größer ist als quer dazu. Um den Elastitzitätsmodul der Auskleidung weiter zu erhöhen, können die einzelnen Lagen von Glassseidengeweben der Zwischenschicht 12 als Hybridgewebe ausgebildet sein. Das bedeutet, es können zusätzlich Kohlefasern als Kett- oder Schussfäden in das Glasseidengewebe eingearbeitet sein, wie z.B. im Patent EP 1 953 094 beschrieben.

Auf die (optionale) Zwischenschicht 12 wird anschließend eine Schutzauskleidung 13 aufgebracht, welche beispielsweise eine Leckschutzauskleidung von jeder der in den eingangs genannten Patentveröffentlichungen beschriebenen Arten sein kann. Die Schutzauskleidung 13 kann auf die gesamte Innenseite des Tanks 1 aufgebracht werden, oder nur auf Teile der Innenseite, z.B. nur über das Ende der Füllmasse 11 bzw. der optionalen Zwischenschicht 12 hinaus geringfügig auf den angrenzenden Boden 3 bzw. Mantel 2. Die Schutzauskleidung 13 umfasst beispielsweise eine Abstandshalteschicht 14, z.B. eine Noppenfolie, zur Ausbildung eines Zwischenwand-Hohlraums 15 für eine Druck-Leckschutzüberwachung, sowie eine Deckschicht 16 aus einem kunstharzgetränkten, aushärtbaren Glas- und/oder Kohlefasergewebe, -gelege, -matte bzw. -vlies.

Das Kunstharz zum Tränken und Aushärten der Leckschutzauskleidung 13 kann gleichzeitig zum Tränken und Aushärten der Zwischenschicht 12 genutzt werden. Dies hat den Vorteil einer schnelleren Verarbeitung.

Fig. 5 zeigt eine alternative Ausführungsform des Verfahrens von Fig. 4, bei welchem anstelle einer Füllmasse 11 vorgefertigte Kunststoffformteile 17 mit etwa dreieckigem Querschnitt und bevorzugt abgerundeten Ecken formschlüssig in den Eckbereich 7 eingebracht werden. Die Kunststoffformteile 17 können beispielsweise ring- oder sektorförmig gebogene Kunststoffrohre mit etwa dreieckigem Querschnitt sein, die in den Eckbereich 7 eingelegt werden. Anschließend werden wieder die (optionale) Zwischenschicht 12 und die Leckschutzauskleidung 13 aufgebracht.

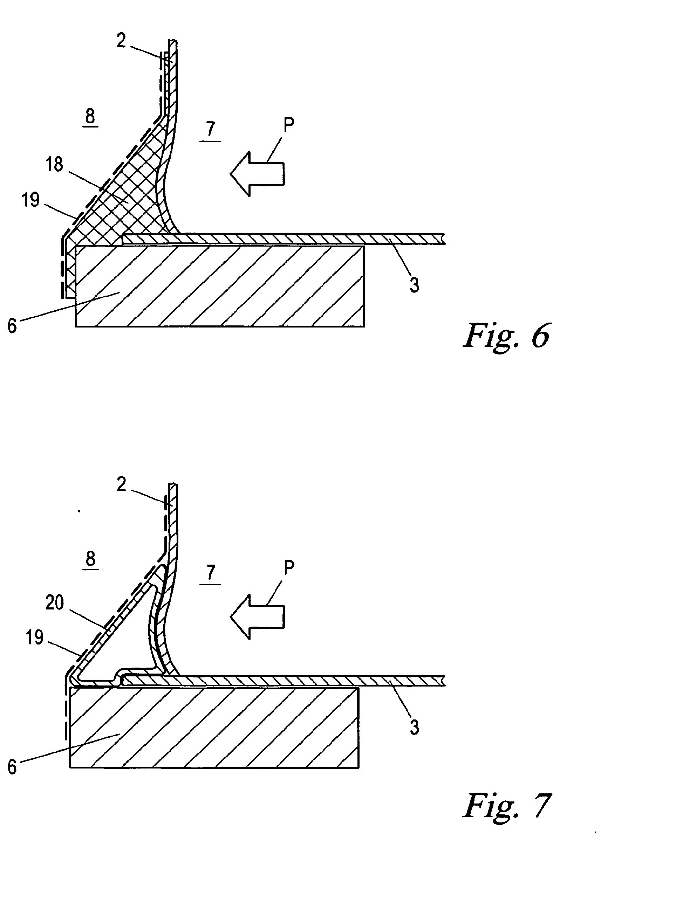

Fig. 6 zeigt eine weitere Ausführungsform des erfindungsgemäßen Verfahrens für das außenseitige Abstützen der Hohlkehle 9 des Tanks 1, was zusätzlich zu den Maßnahmen der Fig. 4 und 5 vorgenommen wird. In einem (optionalen) ersten Schritt wird zunächst der unter dem Tank 1 vorragende Bereich des Fundaments 6 gereinigt und sandgestrahlt. Falls auf den Tankmantel 2 eine Korrosionsschicht im Eckbereich 8 aufgetragen war, wird diese bevorzugt ebenfalls entfernt. Allenfalls auf dem Fundament 6 aufgebaute oder sonstige Schutzbleche werden ebenfalls entfernt.

Anschließend wird eine weitere Füllmasse 18, bevorzugt ein zementverbundener, kunstoffvergüteter Zweikomponenten-Mörtel oder artverwandte Verbindungen, auf den Eckbereich 8 umlaufend aufgebracht, so dass im Querschnitt gesehen eine Dreieckfüllung entsteht und der Übergang zwischen Mantel 2 und Fundament 6 komplett ausgefüllt ist. Die Längsseite des Dreiecks stellt wiederum die Außenseite dar und ist leicht abgeschrägt, so dass Wasser gut ablaufen kann.

Anschließend kann eine medien- und witterungsbeständige Deckschicht 19 auf die Füllmasse 18 aufgebracht werden, beispielsweise aus Kunstharz oder kunstharzgetränkten Glasund/oder Kohlefasergeweben, -gelegen, -matten oder -vliesen, welche aushärten gelassen werden.

Fig. 7 zeigt eine alternative Ausführungsform der Variante von Fig. 6, bei welcher anstelle einer weiteren Füllmasse 18 Kunststoffformteile 20 auf den umlaufenden Eckbereich 8 aufgebracht werden. Die Kunststoffformteile 20 haben wieder etwa dreieckigen Querschnitt und können z.B. aus ring- oder sektorförmigen Kunststoffrohren gefertigt sein.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Sanieren eines Tanks (1), der einen flachen Boden (3) und einen stumpf daraufgesetzten und damit verschweißten Mantel (2) besitzt und auf einem ringsum vorragenden Fundament (6) steht, durch Aufbringen einer Schutzauskleidung (13) auf zumindest einen Teil der Innenseite des Tanks (1), wobei vor dem Aufbringen der Schutzauskleidung (13) in den auf der Tankinnenseite zwischen Boden (3) und Mantel (2) umlaufenden Eckbereich (7) ein umlaufender Füllkörper (11, 17) mit einem etwa dreieckigen Querschnitt eingebracht wird, **dadurch gekennzeichnet, dass** auf den auf der Tankaußenseite zwischen Fundament (6) und Mantel (2) umlaufenden Eckbereich (18) ein weiterer umlaufender Füllkörper (18, 20) mit einem etwa dreieckigen Querschnitt aufgebracht wird.

2. Verfahren nach Anspruch 1, **dadurch gekennzeichnet, dass** als Füllkörper eine aushärtende Füllmasse (11) eingebracht wird, bevorzugt ein zementverbundener, kunststoffvergüteter Zweikomponenten-Mörtel.

3. Verfahren nach Anspruch 2, **dadurch gekennzeichnet, dass** vor dem Einbringen der Füllmasse (11) der genannte Eckbereich (7) sandgestrahlt und bevorzugt mit einem Haftprimer behandelt wird.

4. Verfahren nach Anspruch 1, **dadurch gekennzeichnet, dass** als Füllkörper ein oder mehrere Kunststoffformteile (17) eingebracht werden.

5. Verfahren nach Anspruch 4, **dadurch gekennzeichnet, dass** die Kunststoffformteile (17) ring- oder sektorförmige Kunststoffrohre mit etwa dreieckigem Querschnitt sind, bevorzugt mit abgerundeten Ecken.

6. Verfahren nach einem der Ansprüche 1 bis 6, **dadurch gekennzeichnet, dass** auf den Füllkörper (11, 17) und die unmittelbar daran angrenzenden Bereiche des Bodens (3) und des Mantels (2) eine Zwischenschicht (12) aus kunstharzgetränkten Glas- und/oder Kohlefasern aufgetragen wird, bevor die Schutzauskleidung (13) aufgebracht wird.

7. Verfahren nach Anspruch 6, **dadurch gekennzeichnet, dass** als Zwischenschicht (12) ein mehrlagiges Glasseidengewebe verwendet wird.

8. Verfahren nach Anspruch 7, **dadurch gekennzeichnet, dass** die Zugfestigkeit des Glasseidengewebes (12) in Richtung vom Boden (3) zum Mantel (2) größer ist als in Umlaufrichtung.

9. Verfahren nach einem der Ansprüche 1 bis 9, **dadurch gekennzeichnet, dass** die Schutzauskleidung (13) eine Leckschutzauskleidung ist, die bevorzugt eine Abstandshalteschicht (14) umfasst, besonders bevorzugt eine Noppenfolie.

10. Verfahren nach einem der Ansprüche 1 bis 9, **dadurch gekennzeichnet, dass** die Schutzauskleidung (13) kunstharzgetränkte Glas- und/oder Kohlefasern (16) umfasst.

11. Verfahren nach einem der Ansprüche 1 bis 10, **dadurch gekennzeichnet, dass** als weiterer Füllkörper eine aushärtende Füllmasse (18) aufgebracht wird, bevorzugt ein zementverbundener, kunststoffvergüteter Zweikomponenten-Mörtel.

12. Verfahren nach Anspruch 11, **dadurch gekennzeichnet, dass** vor dem Aufbringen der Füllmasse (18) der genannte Eckbereich (8) sandgestrahlt und bevorzugt mit einem Haftprimer behandelt wird.

13. Verfahren nach einem der Ansprüche 1 bis 10, **dadurch gekennzeichnet, dass** als weiterer Füllkörper ein oder mehrere Kunststoffformteile (20) aufgebracht werden, bevorzugt ring- oder sektorförmige Kunststoffrohre mit etwa dreieckigem Querschnitt.

14. Verfahren nach einem der Ansprüche 1 bis 13, **dadurch gekennzeichnet, dass** auf den weiteren Füllkörper (18, 20) und die unmittelbar daran angrenzenden Bereiche des Fundaments (6) und des Mantels (2) eine Deckschicht (19) aus Kunstharz oder bevorzugt kunstharzgetränkten Glas- und/oder Kohlefasern aufgetragen wird.

## Claims

1. A method for retrofitting a tank (1), which has a flat bottom (3) and a jacket (2) fitted thereon in abutment and welded thereto, said tank standing on a base (6) protruding peripherally and being retrofitted by applying a protection lining (13) to at least part of the inner face of the tank (1), wherein, before the protection lining (13) is applied, a peripheral filling element (11, 17) with an approximately triangular cross section is introduced into the corner region (7) running peripherally over the inner face of the tank between the bottom (3) and jacket (2), **characterised in that** a further peripheral filling element (18, 20) with an approximately triangular cross section is applied to the corner region (18) running peripherally over the outer face of the tank between the base (6) and jacket (2).

2. The method according to claim 1, **characterised in that** a curing filling compound (11) is introduced as filling element, preferably a cement-bound, polymer-modified two-component mortar.

3. The method according to claim 2, **characterised in that**, before the filling compound (11) is introduced, the aforementioned corner region (7) is sandblasted and preferably treated with an adhesive primer.

4. The method according to claim 1, **characterised in that** one or more plastic moulded parts (17) is/are introduced as filling element.

5. The method according to claim 4, **characterised in that** the plastic moulded parts (17) are annular or sector-shaped plastic tubes with approximately triangular cross section, preferably with rounded corners.

6. The method according to one of claims 1 to 6, **characterised in that**, prior to applying the protection lining (13), an intermediate layer (12) formed of synthetic-resin-saturated glass fibres and/or carbon fibres is applied to the filling element (11, 17) and to the regions of the bottom (3) and of the jacket (2) directly adjacent thereto.

7. The method according to claim 6, **characterised in that** a multi-layer glass silk fabric is used as an intermediate layer (12).

8. The method according to claim 7, **characterised in that** the tensile strength of the glass silk fabric (12) in the direction from the bottom (3) to the jacket (2) is greater than in the peripheral direction.

9. The method according to one of claims 1 to 9, **characterised in that** the protection lining (13) is a leak-protection lining which preferably comprises a spacer layer (14), particularly preferably a bubble wrap.

10. The method according to one of claims 1 to 9, **characterised in that** the protection lining (13) comprises synthetic-resin-saturated glass fibres and/or carbon fibres (16).

11. The method according to one of claims 1 to 10, **characterised in that** a curing filling compound (18) is applied as a further filling element, preferably a cement-bonded, polymer-modified two-component mortar.

12. The method according to claim 11, **characterised in that**, before the filling compound (18) is applied, the aforementioned corner region (8) is sandblasted and is preferably treated with an adhesive primer.

13. The method according to one of claims 1 to 10, **characterised in that** one or more plastic moulded parts (20) is/are applied as further filling element, preferably annular or sector-shaped plastic tubes with approximately triangular cross section.

14. The method according to one of claims 1 to 13, **characterised in that** a cover layer (19) made of synthetic resin or preferably synthetic-resin-saturated glass fibres and/or carbon fibres is applied to the further filling element (18, 20) and to the regions of the base (6) and of the jacket (2) directly adjacent thereto.

## Revendications

1. Procédé pour l'assainissement d'une cuve (1) possédant un fond plat (3) et une enveloppe (2) disposée bord-à-bord sur celui-ci et soudée avec celui-ci, la cuve étant disposée sur une base (6) faisant saillie tout autour, par application d'un revêtement protecteur (13) sur au moins une partie du côté intérieur de la cuve (1), dans lequel, avant l'application du revêtement protecteur (13), un corps de remplissage périphérique (11, 17) avec une section transversale approximativement triangulaire est inséré dans la région de coin (7) s'étendant autour du côté intérieur de la cuve, entre le fond (3) et l'enveloppe (2), **caractérisé en ce qu'**un autre corps de remplissage périphérique (18, 20) avec une section transversale approximativement triangulaire est inséré sur la région de coin (18) s'étendant autour du côté extérieur de la cuve, entre la base (6) et l'enveloppe (2).

2. Procédé selon la revendication 1, **caractérisé en ce qu'**une masse de remplissage durcissable (11) est insérée en tant que corps de remplissage, de préférence un mortier à deux composants, enrichi en plastique et lié au ciment.

3. Procédé selon la revendication 2, **caractérisé en ce qu'**avant l'insertion de la masse de remplissage (11), ladite région de coin (7) est sablée et de préférence traitée avec un apprêt adhésif.

4. Procédé selon la revendication 1, **caractérisé en ce que** une ou plusieurs pièces moulées en plastique (17) sont insérées en tant que corps de remplissage.

5. Procédé selon la revendication 4, **caractérisé en ce que** les pièces moulées en plastique (17) sont des tubes en plastique en forme de secteurs ou d'anneaux, avec une section transversale approximativement triangulaire, de préférence avec des coins arrondis.

6. Procédé selon l'une des revendications 1 à 6, **caractérisé en ce qu'**une couche intermédiaire (12) en fibres de verre et/ou de carbone imbibées de résine synthétique est appliquée sur le corps de remplissage (11, 17) et les régions immédiatement adjacentes du fond (3) et de l'enveloppe (2), avant l'application du revêtement protecteur (13).

7. Procédé selon la revendication 6, **caractérisé en ce qu'**une toile en soie de verre à plusieurs couches est utilisée en tant que couche intermédiaire (12).

8. Procédé selon la revendication 7, **caractérisé en ce que** la résistance à la traction de la toile en soie de verre (12) est plus forte dans la direction allant du fond (3) vers l'enveloppe (2) que dans la direction périphérique.

9. Procédé selon l'une des revendications 1 à 9, **caractérisé en ce que** le revêtement protecteur (13) est un revêtement de protection contre les fuites, comprenant de préférence une couche d'espacement (14), et mieux, une feuille alvéolée.

10. Procédé selon l'une des revendications 1 à 9, **caractérisé en ce que** le revêtement protecteur (13) comprend des fibres de verre et/ou de carbone (16) imbibées de résine synthétique.

11. Procédé selon l'une des revendications 1 à 10, **caractérisé en ce qu'**une masse de remplissage durcissable (18) est appliquée en tant qu'autre corps de remplissage, de préférence un mortier à deux composants, enrichi en plastique lié au ciment.

12. Procédé selon la revendication 11, **caractérisé en ce qu'**avant l'application de la masse de remplissage (18), ladite région de coin (8) est sablée et de préférence traitée avec un apprêt adhésif.

13. Procédé selon l'une des revendications 1 à 10, **caractérisé en ce qu'**une ou plusieurs pièces moulées en plastique (20) sont appliquées en tant qu'autres corps de remplissage, de préférence des tubes en plastique en forme de secteurs ou d'anneaux, avec une section transversale approximativement triangulaire.

14. Procédé selon l'une des revendications 1 à 13, **caractérisé en ce qu'**une couche de couverture (19) en résine synthétique ou de préférence en fibres de verre et/ou de carbone imbibées de résine synthétique est appliquée sur l'autre corps de remplissage (18, 20) et les régions immédiatement adjacentes du fond (6) et de l'enveloppe (2).
